# EUROPEAN PATENT APPLICATION

(11) **EP 1 667 309 A1**
(43) Date of publication of application: **07.06.2006**
(21) Application number: 04747033.1
(22) Date of filing: 06.07.2004
(51) Int. Cl.: H02J 7/14, F02D 29/06

(54) **POWER SUPPLY DEVICE**

(30) Priority: 04.09.2003 JP 2003312386
(71) Applicant: HONDA MOTOR CO., Ltd., Tokyo 107-8556 (JP)
(72) Inventor: SHIMIZU, Motohiro, K. K. Honda Gijutsu Kenkyusho, Wako-shi, Saitama 3 51-0193 (JP); EGUCHI, Hiroyuki, K. K. Honda Gijutsu Kenkyusho, Wako-shi, Saitama 351-0193 (JP)
(74) Representative: HOFFMANN EITLE
(86) International application number: PCT/JP2004/009564
(87) International publication number: WO 2005/025030

(57) **Abstract**

In a power supply apparatus having an engine operated generator, the operation of the power supply apparatus is improved in the efficiency in a light load region. The generator 1 is driven by the engine. The output of the generator 1 is converted into alternating power of a particular frequency by a rectifier circuit 2 and a converter 4 and is output to a load. A two-way DC-DC converter 5 supplies the power of a battery 6 to the converter 4. When a load current is equal to or less than a predetermined value, the power generated by the battery 6 is supplied to the load, and the power generated by the generator 1 is not used. If the power supply ability of the battery 6 is lowered, the power generated by the generator 1 is supplied to the load, and the battery 6 is charged.

## Description

### TECHNICAL FIELD

The present invention relates to a power supply apparatus, more particularly to a power supply apparatus having a generator driven by an engine, and being capable of performing efficient operation even in a light-load area.

### BACKGROUND ART

A power generating apparatus, such as a generator driven by an engine, is widely used as a power supply apparatus for various kinds of uses such as portable use and emergency one. In the case of the power supply apparatus with relatively low output, when this power supply apparatus is connected to a load such as a mercury lamp load or an electric motor load, wherein heavy current flows transiently at the time of starting, an overload state occurs transiently. This overload state causes the engine and generator to reduce the rotation thereof, and a stall (engine stall) may happen as a result. Describing more precisely, the transient overload state causes the engine to reduce the rotation thereof, which causes the generator to reduce the output thereof, so that the overload state becomes deeper. This vicious cycle results in the stall mentioned above.

In order to cope with this situation, it has been proposed that the load is restricted in a range in which an engine can be kept to be in the maximum output operation state to eliminate the overload state as quickly as possible, thereby raising the load. For example, the following patent document 1 discloses an engine rotation control device that keeps an engine to be in generally the maximum output state by reducing a load, when it is not determined that the engine rotation increases with a rate of change not less than a predetermined value regardless of the determination in which a fuel supply amount to the engine is generally the maximum.

Meanwhile, the following patent document 2 discloses a technique in which the generator is supplemented the amount of underpower thereof with power from a battery with respect to the transient overload. The following patent document 3 discloses a technique for reducing the rotation of an engine in a light-load state in order to achieve an energy-saving operation in the light-load area.
PATENT DOCUMENT 1: JP 2740567 B
PATENT DOCUMENT 2: JP 2003-102200 A
PATENT DOCUMENT 3: JP 08-11073 Y

### DISCLOSURE OF THE INVENTION

### PROBLEM TO BE SOLVED BY THE INVENTION

As disclosed in the patent documents 1 and 2, various countermeasures are taken for a transient overload. However, an adequate measure has not yet been taken in order to achieve an efficient operation in a light-load area. Specifically, the technique disclosed in the patent document 3 is to reduce the rotation of the engine in the light-load area to achieve an energy-saving operation. However, the minimum rotation is required to be secured even in a mere light load, so that inefficient operation cannot help being performed in the light-load area.

The present invention is accomplished to solve the aforesaid problems, and aims to provide a power supply apparatus having a generator driven by an engine, being capable of achieving an efficient operation even in a light-load area.

### MEANS FOR SOLVING THE PROBLEM

In order to solve the above problems, the first aspect of this invention is that a power supply apparatus comprising a generator driven by an engine; a rectifier circuit for rectifying the output from the generator; an inverter for converting the output from the rectifier circuit into AC power with a predetermined frequency and outputting the AC power to a load side; a battery serving as a power source; and DC-DC converter for supplying the power from the battery to the input side of the inverter; wherein power is supplied from the battery to a load without using the output from the generator when the load current is not greater than the predetermined value.

The second aspect of the invention is that, when the load current is not greater than the predetermined value, the engine is stopped, and when the capability of power supply of the battery becomes insufficient, the engine is automatically started to charge the battery.

The third aspect of the invention is that whether the capability of the power supply of the battery becomes insufficient or not is detected based upon the reduction in the terminal voltage, current or remaining capacity of the battery.

The fourth aspect of the invention is that the DC-DC converter is a two-way DC-DC converter.

The fifth aspect of the invention is that a regulator is disposed between the rectifying element and the inverter, and the two-way DC-DC converter is disposed between the junction point of the rectifier circuit and the regulator and the battery.

The sixth aspect of the invention is that a power supply apparatus comprising a battery serving as a power source and an inverter for converting the power from the battery into AC power with a predetermined frequency and outputting the AC power to a load side, wherein an engine generator is automatically started to charge the battery, when the capability of the power supply of the battery becomes insufficient.

The seventh aspect of the invention is that, in the sixth aspect, whether the capability of the power supply of the battery becomes insufficient or not is detected based upon the reduction in the terminal voltage, current or remaining capacity of the battery.

### EFFECTS OF THE INVENTION

The eighth aspect of the invention is that the rectifying output from the engine generator is configured to be convertible into AC power with a predetermined frequency through the inverter, and when the load current exceeds the predetermined value, the power supply is performed from the engine generator to the load side.

According to the first aspect of the invention, power can be supplied to the load with the engine stopped without using the output from the generator driven by the engine upon the light-load, thereby enabling efficient operation as a whole.

According to the second aspect, the engine is started when the capability of the power supply of the battery becomes insufficient due to the continuous power supply from the battery, thereby coping with the light load state by intermittently driving the engine. Therefore, the operation efficiency upon the light-load state can be enhanced.

According to the third aspect, the control of starting or stopping the engine can simply and appropriately be performed.

According to the fourth aspect, the take-in and takeout of the power from the battery, i.e., the takeout of the power from the battery and the battery charging by the output from the generator can be carried out simply and reliably through a same circuit.

According to the fifth aspect, the variation of the output at the secondary side of the two-way DC-DC converter is absorbed by the regulator in order that the variation does not affect the inverter side.

According to the sixth aspect, the power from the battery is supplied when the load is light, and when the capability of the power supply of the battery becomes insufficient due to the continuous power supply, the engine generator is intermittently driven and the battery is charged. Therefore, the operation efficiency of the engine generator can be enhanced when the load is light.

According to the seventh aspect, in the power supply apparatus having the feature of the sixth aspect, the control of starting or stopping the engine can simply and appropriately be performed.

According to the eighth aspect, when the load is heavy, highly efficient operation is possible as conventionally with the generator driven by the engine serving as a main power source.

### BRIEF DESCRIPTION OF THE DRAWINGS

Fig. 1 is a block diagram showing a concept of a power supply apparatus according to the present invention;
Fig. 2 is a flowchart for explaining an operation of the present invention;
Fig. 3 shows graphs of an output - engine-rotation characteristic of the present invention and the conventional technique; and
Fig. 4 shows an embodiment of a specific circuit of the power supply apparatus according to the present invention.

### DESCRIPTION OF REFERENCE SYMBOLS

1...generator, 2...engine, 3...rectifier circuit (driving inverter), 3-1 to 3-6, 4-1 to 4-4, 5-2-1 to 5-2-4, 5-3-1 to 5-3-4...FET, 4...power converter, 4-1...DC regulator, 4-2...inverter, 5...two-way DC-DC converter, 5-1...transformer, 5-1-1...low-voltage-side winding, 5-1-2...high-voltage-side winding, 5-2...low-voltage-side switching unit, 5-3...high-voltage-side switching unit, 5-4...LC resonator circuit, 5-5...DDC current detecting resistance, 6...battery, 7,8...smoothing capacitor

### BEST MODE FOR CARRYING OUT THE INVENTION

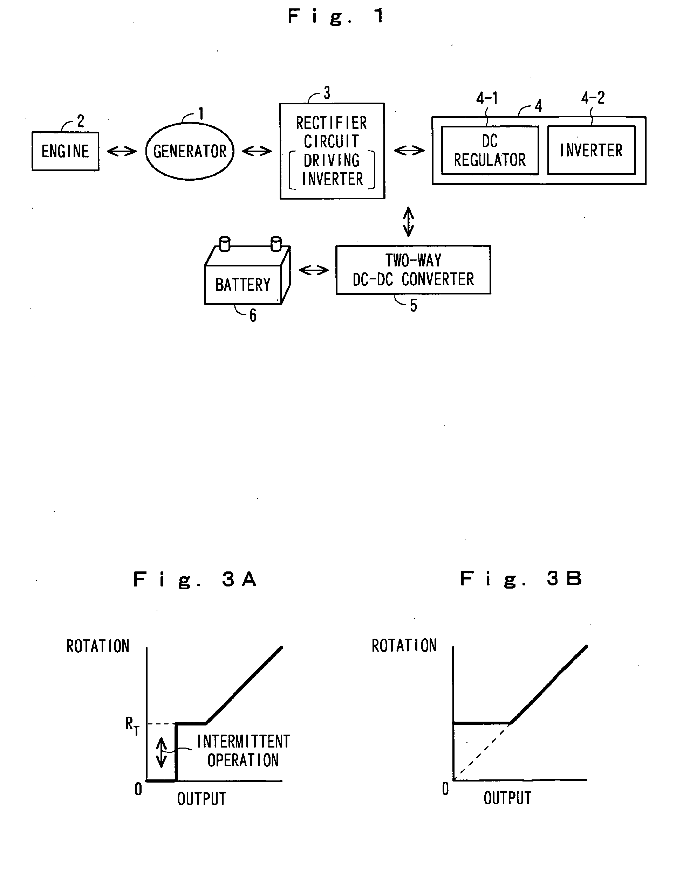

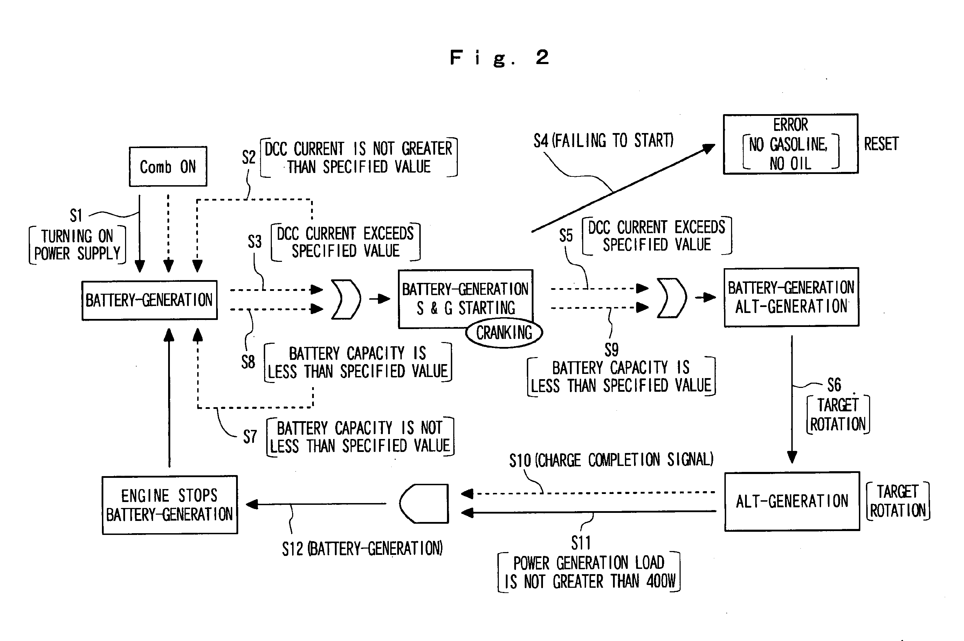

The present invention will be explained in detail with reference to drawings. Fig. 1 is a block diagram showing a concept of a power supply apparatus according to the present invention. Referring to Fig. 1, a generator 1 is, for example, a three-phase multipolar magnet generator. The generator 1 is an engine generator which is connected to, and driven by, an engine 2. In turn, this generator can serve also as an engine-starter motor, that is, this generator is a dual-purpose generator both for a generator function and for an electric motor function.

A rectifier circuit 3 rectifies the output from the generator 1, and functions as a driving inverter that converts the DC voltage given from the output side thereof into three-phase AC voltage and applies the AC voltage to the generator 1.

A power converter 4 comprises a DC regulator 4-1 and an inverter 4-2, and serves to convert the output from the rectifier circuit 3 into AC power having a predetermine frequency and to output the AC power to the load side. Although the DC regulator 4-1 in the power converter 4 is not necessarily provided, providing the DC regulator 4-1 can block the inverter 4-2 from being influenced by the variation in the output from the DC-DC converter 5.

The two-way DC-DC converter 5 boosts the voltage of a battery 6 and outputs the boosted DC voltage to the output side of the rectifier circuit 3. Further, the two-way DC-DC converter 5 supplies the output from the rectifier circuit 3 to the battery 6 for charging the same, when sufficient voltage is output from the rectifier circuit 3 and there is a few remaining capacity of the battery 6. Hereinafter, the battery 6 side of the two-way DC-DC converter 5 is called a primary side, while the side at the rectifier circuit 3 side is called a secondary side. The battery 6 is, for example, a battery of 12V that has been generally used for driving a self starter.

Next, the operation in Fig. 1 will be explained. Note that, hereinafter, the power supply from the generator 1 driven by the engine 2 to the load is designated as the "generator-generation" and the power supply from the battery 6 to the load is designated as the "battery-generation". The two-way DC-DC converter 5 is completely synchronous at the primary side and at the secondary side, which means that it is driven by the same driving signal. With this driving manner, the two-way DC-DC converter 5 performs two-way power conversion based upon a relative voltage difference between the primary side and the secondary side due to a winding ratio of a transformer.

When the engine 2 is to be started, the DC voltage of the battery 6 is boosted by two-way DC-DC converter 5 based upon the relative voltage difference between the primary side and the secondary side due to the winding ratio of the transformer of the two-way DC-DC converter 5, and the boosted DC voltage is supplied to the driving inverter (rectifier circuit) 3. The driving inverter 3 is driven for switching by a start command so as to convert the DC voltage into three-phase AC voltage and supply the AC voltage to the generator 1. As such, the generator 1 is actuated as an engine-starter motor.

Once the engine 2 is started, the generator 1 is driven by the engine 2. The driving inverter 3 stops the switching operation and functions in turn as the rectifier circuit. The output from the generator 1 is rectified through the rectifier circuit (driving inverter) 3, then adjusted through the DC regulator 4-1 in the power converter 4, then converted into AC power with a predetermined frequency through the inverter 4-2, and supplied to the load side.

Upon the normal operation except for the state where the load is light, the generator-generation mainly made by the generator 1 is executed. The rotation of the engine 2 is controlled by an electronic governor that controls the throttle of the engine 2 according to the load current. As a result, the rotation of the engine 2 follows the load, so that the rotation of the engine 2 is made optimum for the load and the output sufficient for the load can be obtained from the rectifier circuit 3.

Since the two-way DC-DC converter 5 is connected to the output side of the rectifier circuit 3, the battery 6, if having a few remaining capacity, is charged by the output from the rectifier circuit 3 through the two-way DC-DC converter 5. Specifically, when the conversion output of the battery 6 is lower than the output voltage of the rectifier circuit 3, the power conversion is performed such that the battery 6 is charged by the output from the rectifier circuit 3 based upon the relative voltage difference between the primary side and the secondary side due to the winding ratio of the transformer of the two-way DC-DC converter 5.

If the remaining capacity of the battery 6 is not less than a specified value when the load is light, the engine 2 is stopped, and the battery-generation mainly made by the battery 6 is performed. When the capability of the power supply to the load becomes insufficient due to the reduction in the remaining capacity of the battery 6, the engine 2 is started and the generation is changed to the generator-generation. Simultaneously, the battery 6 is charged by the output by the generator-generation. When the charging of the battery 6 is completed, the engine 2 is stopped and the generation is transferred again to the battery-generation.

As described above, the battery-generation mainly made by the battery 6 is performed when the load is light, and the engine 2 is intermittently driven according to the reduction in the capability of power supply of the battery 6. In this case, the reduction in the capability of the power supply of the battery 6 is a result of the power supply to the load continuously accumulated, whereby the engine 2 is intermittently driven according to the accumulated load state.

Fig. 2 is a flowchart for explaining the operation in the present invention. Referring to Fig. 2, the solid line represents the operation determined by the power converter 4, while the broken line represents the operation determined by the two-way DC-DC converter 5. It is supposed here that the remaining capacity of the battery 6 is not less than the specified value.

A combination switch is operated to turn the power supply on (S1), the battery-generation (Batt-generation) is performed. At this time, if the load is light, i.e., the load current taken out from the two-way DC-DC converter 5 to the load side (hereinafter referred to as DDC current) is not greater than the specified value (S2), the remaining capacity of the battery 6 is not less than the specified value and the capability of the power supply of the battery 6 to the load is sufficient, so that the battery-generation is continued.

When the load is not light and the DDC current exceeds the specified value (S3), the generator 1 is driven as an engine-starter motor, whereby a cranking is performed. According to this, the engine starting operation is started while the battery-generation is carried out.

In case where the starting of the engine 2 is failed due to no gasoline or no oil to cause an error when the engine starting operation is started (S4), the battery-generation is automatically stopped. In order to cancel the error, the combination switch may be reset in such a manner that it is temporarily turned off, and then, again turned on. In case where the reset operation is performed, it is necessary to take an action for eliminating the error, such as replenishment of gasoline.

The DDC current is continuously detected (S5). After the engine is started, both of the battery-generation and the generator-generation (ALT-generation) are executed, and the rotation of the engine 2 is controlled to the target rotation optimum for the load at that moment (S6).

When the rotation of the engine 2 reaches the target rotation, the output from the rectifier circuit 3 becomes sufficient, so that the battery-generation is substantially stopped by the function of the two-way DC-DC converter 4. In case where the load is changed, the target rotation of the engine 2 is changed according to the change of the load, wherein the power according to the load is supplied by the generator-generation. If the battery 6 is not fully charged at this time, it is charged by the output from the rectifier circuit 3. The operation in this state is normally continued.

When the load is light and the DDC. current is not more than the predetermined value, the engine 2 is intermittently driven and the generator-generation is intermittently performed as described later. When the remaining capacity of the battery 6 is not less than the specified value upon the light load (S7), the capability of the power supply of the battery 6 to the load is sufficient, so that the battery-generation is continued. Atthistime, the engine 2 is not driven, which means the generator-generation is not executed.

When the remaining capacity of the battery 6 is less than the specified value as a result of the continuous electric supply from the battery 6 to the load (S8), the power generator 1 is driven as an engine-starter motor, whereby a cranking is performed. Thus, the engine starting operation is started while the battery-generation is carried out. The remaining capacity of the battery 6 is continuously detected (S9). After the engine is started, both of the battery-generation and the generator-generation are executed, and the rotation of the engine 2 is controlled to the target rotation optimum for the load at that moment (S6).

When the rotation of the engine 2 reaches the target rotation, the output from the rectifier circuit 3 becomes sufficient, so that the battery-generation is substantially stopped by the function of the two-way DC-DC converter 5. At this time, the battery 6 is charged by the output by the generator-generation.

When the charge completion signal (S10) is output after the battery 6 is fully charged, and simultaneously, the load is detected to be not more than the specified value, e.g., not more than 400 W (S11), for example, the instruction for switching to the battery-generation is output (S12). Accordingly, the engine 2 is stopped to stop the generator-generation, whereby the generation is changed to the battery-generation. Upon the light load, the aforesaid operation is repeated, whereby the engine 2 is intermittently driven and the generator-generation is intermittently performed.

In the above-mentioned explanation, it is assumed that the remaining capacity of the battery 6 is not less than the specified value upon the starting. However, in case where the engine 2 cannot be started since the remaining capacity of the battery 6 is less than the specified value, the engine 2 may manually be started at first to cause the generator-generation for charging the battery 6.

Fig. 3 shows graphs of an output - engine-rotation characteristic according to the present invention and the conventional technique. As shown in Fig. 3A, the rotation is switched between "0" and the target revolution R_{T} in the light-load area not more than the specified value according to the output - engine-rotation characteristic of the present invention. Accordingly, the engine 2 is intermittently driven in the light-load area, while driven with the optimum rotation in accordance with the load in the area over the light-load area. On the other hand, as shown in Fig. 3B, the lowest rotation of the engine is always secured and operated even in the light-load area, so that the engine is not intermittently driven according to the output - engine-rotation characteristic of the conventional technique.

In the explanation described above, the overload state is equally handled, which means the power supply is performed by the generator-generation even in the overload state. However, in case where the output from the rectifier circuit 3 is reduced in the overload state and there arises a situation that cannot be handled by the generator-generation, the power supply can be performed by simultaneously using the battery-generation. This is achieved only by performing the power supply to the load in such a manner that the conversion output from the battery 6 is superimposed on the output from the generator-generation. This can be realized by using the two-way DC-DC converter.

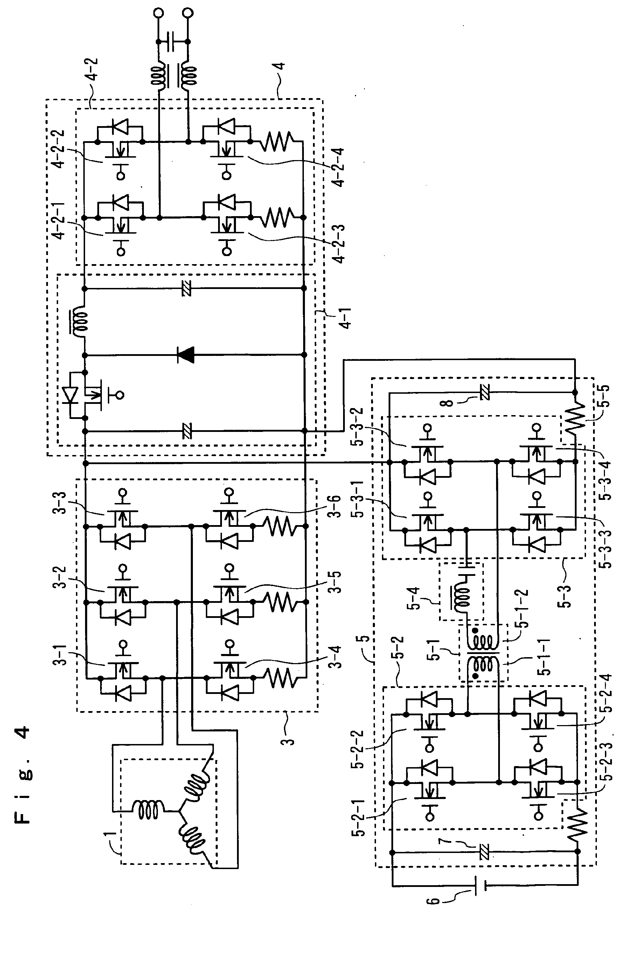

Fig. 4 shows an embodiment of a specific circuit of the power supply apparatus according to the present invention. In Fig. 4, the same or equivalent components to those in Fig. 1 are denoted with the same numerals. The three-phase generator 1 is connected to an engine (not shown). The output side of the generator 1 is connected to the rectifier circuit (driving inverter) 3. Switching elements (hereinafter designated as FET) such as FETs 3-1 to 3-6 are connected in parallel to each rectifying element (diode) of the rectifier circuit 3. These FETs 3-1 to 3-6 convert DC voltage into three-phase AC voltage through ON/OFF actions thereof, so that these FETs constitute a driving inverter that applies this AC voltage to the generator 1.

Note that the rectifying element, which constitutes the rectifier circuit 3, may comprise a parasitic diode that is a switching element such as an FET or a junction diode that is connected separately.

A DC regulator 4-1 in the power converter 4 comprises, for example, an FET, a choke coil, a capacitor, and a diode. The FET is PWM-modulated to make the output of the rectifier circuit 3 smooth and regulate. An inverter 4-2 comprises, for example, four of FETs 4-2-1 to 4-2-4 that are in a bridge connection.

The two-way DC-DC converter 5 enables the exchange of power bilaterally between the battery 6 and the output side of the rectifier circuit 3, and comprises a transformer 5-1 having low-voltage-side winding 5-1-1 in the primary side and high-voltage-side winding 5-1-2 in the secondary side. A boosting ratio of the two-way DC-DC converter 5 is determined based on a winding ratio of the low-voltage-side winding 5-1-1 to the high-voltage-side winding 5-1-2.

A low-voltage-side switching unit 5-2 is inserted into a side of the low-voltage-side winding 5-1-1, and a high-voltage-side switching unit 5-3 is inserted into a side of the high-voltage-side winding 5-1-2. The low-voltage-side switching unit 5-2 comprises, for example, four of FETs 5-2-1 to 5-2-4, which are in a bridge connection, and the high-voltage-side switching unit 5-3 also comprises four of FETs 5-3-1 to 5-3-4.

Each of FETs 5-2-1 to 5-2-4 and 5-3-1 to 5-3-4 of the low-voltage-side switching unit 5-2 and the high-voltage-side switching unit 5-3 are connected in parallel with rectifying elements such as diodes. These rectifying elements may be parasitic diodes of an FET, or junction diodes that are connected separately. The low-voltage-side switching unit 5-2 and the high-voltage-side switching unit 5-3, both of which are in combination with the rectifying elements connected in parallel, can be regarded as switching/rectifying units respectively.

Further, an LC resonance circuit 5-4 is inserted into the side of the high-voltage-side winding 5-1-2 of the transformer 5-1. The LC resonator circuit 5-4 serves to regulate the wave form of the current thereof into a sinusoidal form, the current of which flows inside this circuit when at least one of the low-voltage-side switching unit 5-2 and the high-voltage-side switching unit 5-3 is driven. As a result, the LC resonant circuit 5-4 operates to reduce the switching loss and to prevent the breakdown of the FET by heavy current. This is caused by the fact that the FET becomes possible to be made ON/OFF readily at a zero crossing of the current of a sinusoidal waveform. In addition, the LC resonance circuit 5-4 may be mounted not only in the secondary side but also in the primary side.

The FETs 5-2-1 to 5-2-4 of the low-voltage-side switching unit 5-2 and the FETs 5-3-1 to 5-3-4 of the high-voltage-side switching unit 5-3 are subjected to the switching control by a control circuit (not shown) comprising a CPU and the like. Note that the capacitors 7 and 8 connected to the primary side and secondary side are the capacitors for smoothing the output.

In regard to the low-voltage-side switching unit 5-2 and the high-voltage-side switching unit 5-3 are driven in a completely synchronous manner, i.e., driven by the same driving signal in order to two-way perform the power conversion. This is performed as conventionally well-known such that the pair of the FETs 5-2-1 and 5-2-4 and the pair of the FETs 5-2-2 and 5-2-3 in the low-voltage-side switching unit 5-2 are actuated in an alternating sequence to ON/OFF, and the pair of the FETs 5-3-1 and 5-3-4 and the pair of the FETs 5-3-2 and 5-3-3 in the high-voltage-side switching unit 5-3 are actuated in an alternating sequence to ON/OFF.

By PWM-driving the FETs 3-1 to 3-6 of the driving inverter 3 in a known manner, the generator 1 can be operated as the engine-starter motor. At this process, FETs 3-1 to 3-6 can be put into a synchronous driving without sensors by means of phase discrimination, which is carried out by making use of variations in the current dividing due to the counter-electromotive voltage corresponding to the action of the generator (electric motor) 1. When FETs 3-1 to 3-6 are not driven, the driving inverter unit will serve as the rectifier circuit for the output of the generator 1.

The DDC current can be detected by a current detecting resistance 5-5 disposed at the two-way DC-DC converter 5. It can also be detected by a current transformer disposed at the junction point between the rectifier circuit (driving inverter) 3 and the high-voltage-side switching section 5-3. The remaining capacity of the battery 6 can be detected by the reduction in the terminal voltage, current or remaining capacity of the battery 6. It can also be detected by predicting the electromotive voltage based upon the internal resistance predicted from the temperature and current of the battery 6 or from the current variation and voltage change.

The embodiment was explained above. In the embodiment, the low-voltage-side switching unit 5-2 and the high-voltage-side switching unit 5-3 may not be driven in a completely synchronous manner, but they may selectively be driven to appropriately perform the power conversion from the primary side to the secondary side or from the secondary side to the primary side. For example, driving the two-way DC-DC converter 5 so as to perform the power conversion from the primary side to the secondary side is adequate upon starting the engine. Further, such configuration may be taken in which the low-voltage-side switching unit 5-2 is started to be driven when the monitored output voltage from the rectifier circuit 3 is determined to be lower than the predetermined value, i.e., when the overload state is determined to be established, for example. Such configuration may also be taken in which, when the charged state of the battery 6, that is monitored based upon the voltage or current thereof, is determined to be the overcharged state, the driving of the high-voltage-side switching unit 5-3 is stopped, and when it is determined to be the overdischarged state, the driving of the low-voltage-side switching unit 5-2 is stopped. Thereby charged state of the battery 6 can be kept excellent.

## Claims

1. A power supply apparatus comprising a generator driven by an engine; a rectifier circuit for rectifying the output from the generator; an inverter for converting the output from the rectifier circuit into AC power with a predetermined frequency and outputting the AC power to a load side; a battery serving as a power source; and DC-DC converter for supplying the power from the battery to the input side of the inverter;
wherein power is supplied from the battery to a load without using the output from the generator when the load current is not greater than the predetermined value.

2. The power supply apparatus according to claim 1,
wherein, when the load current is not greater than the predetermined value, the engine is stopped, and when the capability of power supply of the battery becomes insufficient, the engine is automatically started to charge the battery.

3. The power supply apparatus according to claim 1 or claim 2,
wherein whether the capability of the power supply of the battery becomes insufficient or not is detected based upon the reduction in the terminal voltage, current or remaining capacity of the battery.

4. The power supply apparatus according to claim 2,
wherein the DC-DC converter is a two-way DC-DC converter.

5. The power supply apparatus according to claim 4,
wherein a regulator is disposed between the rectifying element and the inverter, and the two-way DC-DC converter is disposed between the junction point of the rectifier circuit and the regulator and the battery.

6. A power supply apparatus comprising a battery serving as a power source and an inverter for converting the power from the battery into AC power with a predetermined frequency and outputting the AC power to a load side, wherein an engine generator is automatically started to charge the battery, when the capability of the power supply of the battery becomes insufficient.

7. The power supply apparatus according to claim 6,
wherein whether the capability of the power supply of the battery becomes insufficient or not is detected based upon the reduction in the terminal voltage, current or remaining capacity of the battery.

8. The power supply apparatus according to claim 6 or claim 7,
wherein the rectifying output from the engine generator is configured to be convertible into AC power with a predetermined frequency through the inverter, and when the load current exceeds the predetermined value, the power supply is performed from the engine generator to the load side.
